# EUROPÄISCHE PATENTANMELDUNG

(11) **EP 2 184 103 A1**
(43) Veröffentlichungstag der Anmeldung: **12.05.2010**
(21) Anmeldenummer: 08450178.2
(22) Anmeldetag: 11.11.2008
(51) Int. Cl.: B01J 19/00

(54) **Modularer Reaktor**

(71) Anmelder: Onea Engineering Austria GmbH, 4840 Vöcklabruck (AT); Aurotec GmbH, 4840 Vöcklabruck (AT)
(72) Erfinder: Zikeli, Stefan, 4844 Regau (AT); Ecker, Friedrich, 4850 Timelkam (AT); Longin, Michael, 4863 Seewalchen am Attersee (AT); Weidinger, Klaus, 4860 Lenzing (AT)
(74) Vertreter: Sonn & Partner Patentanwälte

(57) **Zusammenfassung**

Die Erfindung betrifft modulare Mikroreaktoren aus Mikroreaktorteilen mit einem Plattenkörper (1), der in einer Plattenseite eine nutförmige Vertiefung (22) aufweist, in der ein Reaktionsrohr (21) aufgenommen ist, und das Reaktionsrohr Anschlussenden (16) an Außenseiten des Plattenkörpers aufweist, Reaktionsrohre zur turbulenten Durchmischung, Kits zur Herstellung der Reaktoren sowie deren Verwendung zur Einleitung chemischer Reaktionen.

## Beschreibung

Die vorliegende Erfindung betrifft Mikroreaktoren für chemische Reaktionen und zum Mischen chemischer Substanzen.

Minireaktoren oder Mikromischer sind sehr stark miniaturisierte Rohrreaktoren mit Rohr- oder Kapillardurchmesser gewöhnlich im Bereich von 0,2 mm bis 5 mm. Bedingt durch die geringen Kapillardurchmesser stellen sich im Reaktorbereich minimal zu bewegende Prozessmengen und Flüssigkeiten ein.

Die in DE 10 2004 038 555 B3 dargestellte Erfindung betrifft einen Mikroreaktor aus korrosionsbeständigem Material in modularem Aufbau für die Herstellung einer Mischsäure. Dem darin beschriebenen Mikroreaktor liegt die Idee zugrunde, durch die Modularisierung und Miniaturisierung die Mikroreaktionstechnik zu simulieren, als Basis für die Umsetzung in eine Großanlage. Hierzu bestehen die einzelnen Module aus Kunststoff (PTFE)-Schläuchen (di= 0,7 bis 2 mm), die über Kunststoffverbindungen, ebenfalls aus dem Werkstoff PTFE, zu einem Mikroreaktionsmodul zusammengesetzt werden. Beschrieben werden auch das Dichtungsmaterial sowie das leichte Öffnen und Verbinden der Module. Die Verbindungsstücke können als Linear-, T-Stück-, oder Kreuzstückverbindung ausgeführt sein. Vor Eintritt oder am Austritt können Lochscheiben, ausgeführt als Tantalplättchen, welche Bohrungen (5-800 µm) aufweisen, angebracht werden. Die zur Reaktionsführung notwendige Kühlung oder Erwärmung kann in einem Temperierbad erfolgen. Über die Lochscheiben können Mikrostrukturen hergestellt werden, durch die Vorzüge, in Bezug auf Mischung der Reaktionskomponenten und Reaktionsgüte, in der Mikroreaktionstechnik erzielt werden.

DE 44 10 417 A1 betrifft die Reaktionsführung von Toluol, Salpetersäure, Schwefelsäure und Wasser in beliebiger Reihenfolge in einem mit Mischelementen ausgeführten diskontinuierlich oder kontinuierlich geführten Reaktor. Die Reaktionsführung und Mischung ist so zu gestalten, dass es zu keiner Rückvermischung kommt. Die dazu verwendeten Mischelemente können Statikmischer, Pumpen, Düsen, Rührer oder Kombinationen davon sein. Bei einer kontinuierlichen Vermischung der Reaktionsteilnehmer können im Reaktor Lochbleche, Schlitzbleche, Prallbleche, Strömungsbrecher, Rührer oder ähnliche Einbauten oder Elemente verwendet werden. Die Rohrreaktoren besitzen zudem Einbauten zur Redispergierung, Strömungsbrecher, Umlenkbleche, Statikmischer oder Rührer, oder eingebaute Lochbleche.

Der vorliegenden Erfindung liegt die Aufgabe zugrunde verbesserte modulare Reaktoren sowie deren Teile für eine einfache Umgestaltung eines Reaktionskonzepts zur Verfügung zu stellen.

Die vorliegende Erfindung betrifft in einer ersten Ausführungsform einen Mikroreaktorteil mit einem Plattenkörper, der in einer Plattenseite eine nutförmige Vertiefung aufweist, in der ein Reaktionsrohr aufgenommen, ist und das Reaktionsrohr Anschlussenden an Außenseiten des Plattenkörpers aufweist. Ein wesentlicher Anwendungsbereich solcher Teile ist der modulare Aufbau von Mikroreaktoren aus diesen Teilen. Die Plattenkörper können aus festen Materialien, wie Stahl, Edelstahl, Keramik, Sintermetalle, Aluminium, Kunststoffe und Buntmetalle, gefertigt sein. Vorzugsweise ist der Mikroreaktorteil bzw. der Plattenkörper quaderförmig.

Die Vertiefungen werden insbesondere zur Führung von Wärmeträgermedien, wie Kühl- oder Wärmeflüssigkeiten eingesetzt, während im Reaktionsrohr die Reaktanden vermischt werden. Vorzugsweise bildet die Vertiefung um das Reaktionsrohr einen Kanal. In diesem länglichen Kanal entlang des Reaktionsrohres kann ein Wärmeträgermedium, wie beispielsweise eine Kühl- oder Wärmeflüssigkeit, geführt werden. Das Wärmeträgermedium kann von einem Plattenkörper zu einem anderen Plattenkörper eines weiteren Moduls bzw. Mikroreaktorteils intern oder von außen zugeführt werden. Die Anordnung der Platten richtet sich nach den Reaktionserfordernissen. Die gesamte Reaktoreinheit kann durch Verschrauben oder andere Klemmmechanismen befestigt und auf der Seite der nutförmigen Vertiefung abgedichtet werden. Die Vertiefungen können als Einfräsung, durch Sinterung, durch Guß oder mechanische Bearbeitung (Fräsen, Drehen, Bohren) hergestellt werden. Plattenkörper können von beliebigen, den Erfordernissen angepassten, Längen sein. Sie können auch aus mehreren Einzelplatten über Flansche und Dichtungen zusammengesetzt sein.

Ein Mikroreaktor, der aus einem oder mehreren Mikroreaktorteilen zusammengesetzt ist, kann endlos als Rohr- Rohrschleifereaktor geführt werden oder aber stockweise modular aus den Mikroreaktorteilen aufgebaut werden. Wird stockweise aufgebaut, kann über die Platten der anliegenden Mikroreaktorteile die Vertiefung zur Führung des Wärmeträgermediums abgedichtet werden.

Vorzugsweise endet das Reaktionsrohr an einem Dichtungselement an der Außenseite des Plattenkörpers, welches vorzugsweise auch die Vertiefung abschließt. Die Plattenkörper können zudem an der Oberseite oder Unterseite eine Dichtung haben und so mit anderen Platten verbunden werden, um einen modularen Aufbau zu erhalten und gleichzeitig die Vertiefungen abzudichten. Also wird vorzugsweise die Vertiefung in der Plattenseite durch eine weitere Platte abgedichtet. Diese weitere Platte kann nun einerseits ein weiterer Plattenkörper eines anderen Mikroreaktorteils, eine Isolierplatte ohne Reaktorrohre oder schlichtweg eine dünne Abdichtplatte sein.

Vorzugsweise wird entlang des Plattenrahmens des Plattenkörpers eine Dichtung, vorzugsweise eine Kunststoffdichtung, aufgenommen. Diese Dichtung kann z.B. zur besseren Halterung im Plattenrahmen versenkt werden. Ebenfalls ist es möglich, die verschiedenen Kanäle, die durch die mundförmigen Vertiefungen gebildet werden, gegenseitig durch weitere Dichtungen abzudichten, wobei es allerdings auch möglich ist, auf eine spezielle Kunststoffdichtung zu verzichten und die Kanäle bzw. die Stege zwischen den Kanälen durch engen Kontakt mit einer abdichtenden Platte abzudichten.

In einer weiteren bevorzugten Ausführungsform weist der Plattenkörper Fixierelemente zur Befestigung einer Platte oder weiterer Mikroreaktorteile an eine Plattenseite bzw. Adaptoren eines Fixierelements, vorzugsweise Einkerbungen für Zugstangen, auf. Das Fixierelement kann, um einzelne Mikroreaktorteile zusammen zu fixieren, aus Fixierbügel bestehen, die durch Zugstangen miteinander verbunden werden und durch Knebelspanner fixiert werden. Für die an den Seiten der Mikroreaktorteile anliegenden Zugstangen werden vorzugsweise Einkerbungen in die Plattenkörper eingearbeitet. Diese verhindern auch ein gegenseitiges Verrutschen der Plattenkörper.

Vorzugsweise weist der Plattenkörper mindestens zwei Reaktionsrohre auf. Diese mindestens zwei Reaktionsrohre können in derselben, gegebenenfalls meanderförmigen, nutförmigen Vertiefung vorliegen. In weiteren bevorzugten Ausführungsformen können auch mindestens 3, mindestens 4, mindestens 5 oder mindestens 6 Reaktionsrohre in nutförmigen Vertiefungen eines Mikroreaktorteils aufgenommen sein. Dabei können beispielsweise die Anschlussenden der verschiedenen Reaktionsrohre an einer Außenseite des Plattenkörpers enden, um gegebenenfalls modular, je nach Anwendung, verschiedene Reaktionsrohre miteinander einfach verbinden zu können. Solche Reaktionsrohre eines Mikroreaktorteils können miteinander verbunden werden bzw. können Reaktionsrohre auch zu Reaktionsrohren anderer Mikroreaktorteile verbunden werden ("Plattenverbindung"). Gemäß einer speziellen Ausführungsform werden im Mikroreaktorteil die Anschlussenden an den Außenseiten des Plattenkörpers der zwei Reaktionsrohre über ein Verbindungselement ("Rohrverbinder") verbunden.Verbindungselemente zwischen den einzelnen Rohren innerhalb eines Mikroreaktorteils bzw. zwischen Mikroreaktorteilen können weiters auch über einen Fluideinlass oder Fluidauslass verfügen, um Reaktionsfluide in die Reaktionsrohre einzulassen bzw. auszulassen.

Vorzugsweise hat die nutförmige Vertiefung einen meanderförmigen Verlauf. Zwischen meanderförmigen Abschnitten des Verlaufs können Trennwände vorgesehen werden, um einen kontinuierlichen Fluss eines Wärmeträgermediums zu gewährleisten. Die Trennwände sind vorzugsweise durch eine Platte zusammen mit dem Plattenrahmen des Plattenkörpers abgedichtet. In die nutförmigen Vertiefungen können dann die Reaktionsrohre eingelegt werden, die beispielsweise U-förmig angelegt sind, z.B. wenn eine U-Kurve des Reaktionsrohres beispielsweise in einer Meanderschlinge liegt und die Anschlussenden der Reaktionsrohre an einer gegenüberliegenden Meanderschlinge an der Außenseite des Plattenkörpers enden. Gemäß dieser Ausführungsform können beliebig viele Reaktionsrohre in einem Plattenkörper vorgesehen werden, welche gemeinsam durch ein Wärmemedium, welches in der nutförmigen Vertiefung geführt werden kann, erwärmbar oder kühlbar sind. Gemäß dem modularen Reaktoraufbau könnte dann pro Mikroreaktorteil eine Temperaturstufe eingestellt werden, welche sich von anderen Temperaturstufen anderer Mikroreaktorteile unterscheidet.

Vorzugsweise weist ein Anschlussende eines Reaktionsrohres oder ein Fluideinlass oder Fluidauslass eines Verbindungselements einen Fluiddurchmischer auf. Ein Fluiddurchmischer ist z.B. ein Strömungsbrecher, Strömungsbeschleuniger, Mischdüsen oder eine einragende Injektionsnadel bzw. Mischlanze. Am Ende, der nach außen geführten und in das Verbindungselement ragenden Rohre können Mischdüsen angebracht sein, die als perforierte Scheibe das Rohrende abdecken. Durch Anbringen von Bohrungen in den Mischdüsen kann die austretende Geschwindigkeit der Flüssigkeit so angepasst werden, dass das z.B. gegenüber eintretende und einzumischende Fluid strömungsmäßig ideal eingemischt wird. Nach der ersten Einmischung und Vereinigung beider Fluide kann vor Eintritt in das nächste Rohr des Reaktors eine weitere Mischdüse zum nochmaligen Abmischen eingebaut sein. Mischdüsen können z.B. aus Gold, Platin, Edelstahl, Buntmetalle, Kunststoff, Keramik, Sintermaterial gefertigt sein. Statt einer Mischdüse kann auch ein poröses Sintermetall als alternativer Fluiddurchmischer eingesetzt werden. Als Mischdüse kann auch ein poröses Sintermetall eingesetzt werden. Im Allgemeinen verfolgt der Fluiddurchmischer den Zweck Fluide möglichst turbulent zuführen bzw. zwei Fluide möglichst komplett zu vereinen, wobei laminare Strömungen, welche zur Entmischung führen können, gebrochen werden.

Es können auch Gase mit Gasen oder mit Flüssigkeiten gemischt werden. Gleichzeitig kann das Verbindungselement auch als Wärmetauscher und gleichzeitiger Statikmischer ausgebildet sein. Vorzugsweise weist der Fluiddurchmischer mehrere Mischzonen auf, wie beispielsweise durch Anbringung einer Injektionslanze mit mehreren Öffnungen bzw. Verwendung mehrerer Injektionslanzen mit verschiedenen Längen, die an unterschiedlichen Punkten in die Rohre oder Verbindungselemente einragen. Durch eine solche versetzte Durchmischung werden sogenannte "hot spots" bei der Einmischung vermieden (Losey et al., Ind. Eng. Chem. Res., 40 (2001): 2555-2562).

Gemäß einer weiteren Ausführungsform ist es auch möglich, in einem Reaktionsrohr oder an einem Anschlussende einen Sensor, insbesondere einen Temperatursensor, vorzugsweise in Verbindung mit einem Thermostat, optischen Sensor oder Brechungsindexsensor, vorzugsweise mit einem Messprisma, anzubringen.

Darüberhinaus kann ein Verbindungsblock auch so ausgeführt sein, dass In-Line Messgeräte zur Überprüfung, Steuerung und Regelung von Reaktionen eingebaut werden können (z.B. Anschluss für GC, HPLC, NIR, DSC, Viskositätsmessgeräte, pH-Messgeräte, Temperatur und Druckmessgeräte, Durchflussmessgeräte, Brechungsindex, In-Line Refraktometer etc.).

In den Rohren, Verbindungselementen oder Anschlussteilen an den Anschlussenden der Rohre können auch Katalysatoren (z.B. eingebaut in einem Käfig) eingebaut werden, damit auch Reaktionen an katalytisch großen Oberflächen durchgeführt werden können.

Zusätzlich kann ein Verbindungselement am Anschlussende eines Rohres so ausgeführt sein, dass ein Überdruckregler, wie Notentlastungsbohrungen oder Berstscheiben, zur Druckentlastung angebracht ist. Gemäß der vorliegenden Erfindung ist es daher bevorzugt, dass ein Anschlussende eines Reaktionsrohres mit einem Überdruckregler, vorzugsweise einem Überdruckventil, einer Berstscheibe oder Pfropfen, verbunden ist. In einem weiteren Erfindungsaspekt betrifft die vorliegende Erfindung ein Reaktionsrohr mit einer Querschnittsverengung als Durchmischungselement wobei der Querschnitt an (nur) einer Seite des Rohres, vorzugsweise rundförmigen Rohres, um mindestens 15%, vorzugsweise mindestens 20%, verengt ist. Das Reaktionsrohr weist vorzugsweise auch Querschnittserweiterungen um z.B mindestens 15%, vorzugsweise mindestens 20%, des Rohrquerschnitts auf. Querschnittsverengungen und -erweiterungen werden vorzugsweise regelmäßig alternierend vorgesehen. Besonders vorteilhaft ist, dass die Querschnittsverengung nur an einer Seite des Rohrquerschnitts ist und der Querschnitt somit asymmetrisch verengt ist. Bei einem solchen asymmetrischen Einengen kommt es zu einem Umlenken des Fluidflusses, welches zu einer besonders effizienten Durchmischung führt. Insbesondere bei der Durchmischung von an sich nicht mischbaren Fluiden, die beispielsweise Emulsionen oder Dispersionen bilden, kommt es hierbei zu einem Umlenken des Stromes und Durchmischung der beiden andernfalls eventuell entmischten Fluide. Das Reaktionsrohr weist somit vorteilhafterweise im Rohrverlauf Querschnittseinengungen von mindestens 15%, vorzugsweise mindestens 20%, der Querschnittsfläche an einer Seite des Rohrquerschnitts auf, welche vorzugsweise durch Rohrknicke verursacht werden. Zudem weist vorzugsweise das Rohr auch Querschnittserweiterungen auf, welche zusätzlich zu den Querschnittsverengungen den turbulenten Strömungsverlauf begünstigen.

Vorzugsweise ist das Rohr im Querschnitt gegenüber zu der Verengung und/oder 90° zur Verengung nicht oder nicht um mehr als 10% zum Querschnitt des Rohres erweitert. Beispielsweise kann der Querschnitt gegenüber der Verengung einen Halbkreis bilden.

Vorzugsweise weist das Reaktionsrohr mehrere Querschnittsverengung auf. Dabei kann die Seite der Querschnittsverengung im Rohrquerschnitt in alternierender Abfolge wechseln. Die Querschnittsverengungen können in beliebigen Winkeln zur Rohrachse angebracht sein, insbesondere bei einem Winkel von 0-180° zur Rohrachse, im Speziellen um 90°. Die Querschnittsverengungen können jede beliebige Geometrie einnehmen, z.B. keilförmig, geradförmig, prismaförmig, zylinderförmig oder kugelförmig sein. Durch eine alternierende Verengung kommt es zu einer besonders turbulenten Strömung und Umwälzung des Fluidgemisches. Die Querschnittsverengungen können somit auch spiralförmig dem Reaktionsrohr folgen und auch gegeneinander gerichtet sein, indem beispielsweise die Querschnittsverengungen im Rohrquerschnitt gegenüberliegend versetzt sind. Die Querschnittsverengungen werden vorteilhafterweise durch eine Quetschung des Rohres erzeugt, wie beispielsweise durch einen keilförmigen, geradförmigen, prismaförmigen, zylinderförmigen oder kugelförmigen Körper.

Bevorzugt wird zudem, dass mindestens 10%, vorzugsweise 10% bis 90%, insbesondere 15% bis 70%, der Rohrlänge Querschnittsverengungen aufweisen. Die Verengungen können direkt aneinanderschließen oder durch unverengte, vorzugsweise auch unerweiterte, Rohrabschnitte getrennt sein. Diese Rohrabschnitte können etwa mindestens die Länge eines verengten Abschnittes, mindestens die doppelte, mindestens dreifache oder mindestens oder maximal die vierfache Länge eines verengten Abschnittes aufweisen.

Die Reaktionsrohre an sich oder im Mikroreaktorteil, wie oben allgemein beschrieben, können aus Stahl, Edelstahl, Keramik, Sintermetallen, Aluminium, Kunststoff, Buntmetallen, Edelmetallen hergestellt sein. Sie können gerade sein, gebogen nach unterschiedlichen Mustern oder bestimmte Querschnittsverengungen aufweisen, die die im Inneren geführte Strömung derart beeinflussen, dass die Medien im Rohr durch Strömungsumlenkung gemischt werden. Die Verengungen können in beliebigem Muster (auch wiederkehrend) am Rohr angebracht sein. Dies ist ein entscheidender Vorteil gegenüber bekannten Rohrreaktoren mit Einbauten zur Durchmischung der Reaktanden. An Kunststoffrohre können z.B. Quetschelemente außen angebracht sein um die entsprechende Rohrquetschung zu erhalten. Auch flexibles Schlauchmaterial kann daher neben starren Materialien verwendet werden.

Vorzugsweise sind die Reaktionsrohre Kapillaren mit einem Innendurchmesser von 0,05 mm bis 1 mm oder weitere Rohre von mindestens 1 mm bis fertigungstechnisch machbaren Durchmessern, wie beispielsweise bis 20 mm, bis 15 mm, bis 10 mm, bis 8 mm oder bis 5 mm. Die Reaktionsrohre können von außen in die nutförmige Vertiefung aufgenommen werden. Diese Reaktionsrohre werden vorzugsweise im Mikroreaktorteil eingesetzt.

In einem weiteren Aspekt betrifft die vorliegende Erfindung einen Mikroreaktor mit mindestens zwei Mikroreaktorteilen, jeweils mit einem Plattenkörper, der in einer Plattenseite eine nutförmige Vertiefung aufweist, in der ein Reaktionsrohr aufgenommen ist und das Reaktionsrohr Anschlussenden an Außenseiten des jeweiligen Plattenkörpers aufweist, wobei Reaktionsrohre der verschiedenen Mikroreaktorteile über Anschlussenden über ein Verbindungselement verbunden sind.

Verbindungselemente sind vorzugsweise Verbindungsblöcke, welche einfach modular an die Außenseite der Reaktorteile angebracht werden können. In die Vertiefungen der Mikroreaktorteile werden Rohre zur Führung der Reaktionsprodukte eingesetzt. An einem Ende sind Durchlässe durch die Gehäuseplatte angebracht, durch die die Reaktionsrohre geschoben werden können und über Dichtungen in Reaktionsrohrverbindungselemente, z.B. in Form von Verbindungsblöcken, hineinragen. Die Verbindungselemente können entweder nur als Umlenkung und Verbindung zum nächsten Rohr fungieren oder aber auch als Einspeisestelle, Mischstelle, oder Produktabzug ausgebildet sein. Durch diese Anordnung können je nach Reaktion und Reaktionszeiterfordernis die Reaktionsrohre durch angepasste Verbindungsblöcke oder entsprechende Rohrverbindungen umgangen werden, damit wird die Flexibilität und Modularität erhöht. Materialien der Verbindungselemente können sein: Stahl, Edelstahl, Keramik, Sintermetalle, Aluminium, Kunststoffe, Buntmetalle, Edelmetalle. Verbindungselemente können zudem Bohrungen zur Zu- und Abfuhr von Kühl-oder Wärmemedien in den nutförmigen Vertiefungen aufweisen.

Vorzugsweise ist ein Mikroreaktorteil des Mikroreaktors wie oben definiert. Insbesondere bevorzugt umfasst der Mikroreaktor mindestens zwei oder mehr der erfindungsgemäßen Mikroreaktorteile.

In speziellen Ausführungsformen weist ein Reaktionsrohr eines Mikroreaktorteils, vorzugsweise aller Mikroreaktorteile, zumindest zwei Anschlussenden auf, welche beide an einer Außenseite des Plattenkörpers des jeweiligen Reaktorblocks enden. Diese an derselben Außenseite des Plattenkörpers endenden Anschlussenden können auf einfache Weise miteinander modular verbunden werden, insbesondere durch die oben genannten Verbindungselemente, wie Verbindungsblöcke, die passgenau an den Plattenkörper angefügt werden können.

In weiteren Ausführungsformen können die Reaktionsrohre durch ein Verbindungselement verbunden sein, welches optional einen Einlass oder Auslass für Reaktionsfluid in das Reaktionsrohr, und/oder einen Einlass oder Auslass für Fluid in einen Kanal, der durch die nutförmige Vertiefung gebildet wird, umfasst. Im Allgemeinen können die Reaktionsrohre der verschiedenen Mikroreaktorteile durch Steckverbindungen, Rohre oder Schläuche verbunden sein.

Der erfindungsgemäße modulare Mikroreaktor ermöglicht es, verschiedene Mikroreaktorteile aufzunehmen, welche in verschiedener Reihenfolge unterschiedliche Temperaturstufen darstellen können, wenn sie durch das in den Vertiefungen geführte Wärmeträgermedium unterschiedlich erwärmt oder gekühlt werden. Zwischen einzelnen Mikroreaktorteilen ist es daher bevorzugt, wenn ein thermisches Isolierelement vorgesehen wird. Ein solches thermisches Isolierelement kann beispielsweise eine Platte aus Isoliermaterial oder einzelnen Isolierkörpern, welche zwischen die beiden Platten gespannt werden um eine Beabstandung zu erreichen, sein.

In einem weiteren Aspekt betrifft die vorliegende Erfindung einen Kit zur Herstellung eines Mikroreaktors umfassend einen Mikroreaktorteil, vorzugsweise mindestens zwei Mikroreaktorteile wie oben definiert, und vorzugsweise ein Verbindungselement zum Verbinden der Reaktionsrohre der Mikroreaktorteile. Ebenfalls betrifft die Erfindung ein Verfahren zur Herstellung eines Mikroreaktors durch Zusammenfügen von Mikroreaktorteilen und gegebenenfalls Verbinden von Reaktionsrohren. Der Kit umfasst insbesondere auch Fixierelemente zur Positionierung einzelner Mikroreaktorteile, wie beispielsweise Fixierbügel, Zugstangen und Knebelspanner. Weiters können einzelne Schläuche zum Anschluss von Temperiermedien zum Durchfluss in den nutförmigen Vertiefungen vorgesehen werden.

Ein weiterer Aspekt der vorliegenden Erfindung betrifft die Verwendung eines Mikroreaktorteiles wie oben beschrieben, des Reaktionsrohres bzw. des Mikroreaktors zum Durchmischen zweier Fluide in den Reaktionsrohren. Wie oben bereits ausgeführt, ist es besonders vorteilhaft, wenn die erfindungsgemäßen Reaktionsrohre mit den Querschnittsverengungen, wie beispielsweise Einkerbungen durch Knicke, zum Einsatz kommen, um einerseits die Turbulenz der Strömung durch die Rohre zu erhöhen und andererseits die Fluide asymmetrisch umzulenken. Daher ist es besonders bevorzugt, wenn die Fluide eine Emulsion oder Dispersion bilden und z.B. physikalisch andernfalls nicht mischbar sind. Gemäß einer weiteren Ausführungsform ist es bevorzugt, wenn die Durchmischung durch Verwendung der erfindungsgemäßen Mikroreaktorteile, Reaktionsrohre oder Reaktoren vorgenommen wird, um eine chemische Reaktion der beiden Fluide zu bedingen. Selbstverständlich können auch mehr als zwei Fluide eingesetzt werden, beispielsweise können gemäß dem Mikroreaktor zunächst zwei Fluide gemischt werden, durch einen weiteren Einlass ein drittes Fluid hinzugemischt werden usw.. Als Fluide kommen Reaktionsteilnehmer, aber auch Reaktionsunterbrecher, zum Einsatz. Vorzugsweise wird ein Mikroreaktor mit mindestens zwei Mikroreaktorteilen verwendet und die Reaktionsrohre der Mikroreaktorteile auf unterschiedliche Temperaturen erwärmt oder gekühlt, vorzugsweise durch ein Wärmeträgermedium, vorzugsweise Wasser, welches in den nutförmigen Vertiefungen geführt wird.

Wärmeträger sind beispielsweise Wärme- oder Kühlfluide und können z.B.: Flüssigkeiten, Dampf oder Gase sein. Der Wärmeträger kann im Gleichstrom, Gegenstrom, Kreuzstrom zu dem in den Reaktionsrohren strömenden Fluid bzw. Reaktionsgemisch geführt werden. Der Wärmeträger kann in jeden einzelnen Plattenkörper eingespeist und abgezogen werden oder in Serie bzw. parallel geschaltet werden.

Bevorzugt wird, dass an einer Mischstelle der beiden Fluide diese mit unterschiedlichen Geschwindigkeiten gemischt werden, vorzugsweise bei mindestens 2-fachen, vorzugsweise mindestens 3-fachen, insbesondere mindestens 4-fachen, Geschwindigkeitsunterschieden. Dadurch kommt es zu einem Durchdringen der beiden Fluide und konsequenterweise zu einer effizienten Durchmischung.

Bevorzugt wird auch, dass an der Mischstelle die beiden Fluide im Winkel von 140° bis 220°, vorzugsweise 160° bis 200°, insbesondere bevorzugt 180°, aufeinandertreffen. Dies fördert die oben genannte Durchdringung der beiden Fluide. Die Weiterströmung der Fluide kann beispielsweise 90° versetzt zu den Einlassrohren der beiden zu mischenden Fluide fortgeführt werden. Ein Fluid kann beispielsweise durch ein Reaktionsrohr zugeleitet werden, das bereits eine Passage durch ein Reaktionsrohr im Mikroreaktorteil hinter sich hat, und ein zweites Fluid kann durch einen Einlass am Verbindungselement zugeführt werden. Das Gemisch wird dann in ein weiteres Reaktionsrohr im Mikroreaktorteil weitergeführt. Die Geschwindigkeit der beiden Fluide an der Mischstelle kann durch den Druck und den Querschnitt einer Mischdüse, vorzugsweise durch Auswahl einer Lochblende mit einer bestimmten Anzahl an Löchern, eingestellt werden. Durch bestimmte vorgefertigte Lochblenden mit bestimmten Summenöffnungsquerschnitten, beispielsweise eingestellt durch eine bestimmte Anzahl an Löchern mit konstantem Öffnungsquerschnitt, kann ein modularer Mikroreaktor gemäß der vorliegenden Erfindung für bestimmte Anwendungen und Durchströmungsraten eingestellt werden.

Die Rohre des Mikroreaktors eignen sich auch für Hochdruckreaktionen, und so kann beispielsweise der Eingangsdruck eines Fluids mindestens 1 bar, mindestens 5 bar, vorzugsweise mindestens 8 bar, im Speziellen bevorzugt mindestens 10 bar, betragen. Diese Druckbeispiele sollen jedoch nicht als limitierend, sondern lediglich als vorzugsweise Beispiele angesehen werden. Der Eingangsdruck des Fluides kann selbstverständlich je nach Geometrie, Anzahl der Rohre oder Strömungsbrecher (für turbulente, verwirbelte Strömungen) und den damit in Verbindung stehenden Druckverlust gewählt werden. Vorzugsweise wird eine passende Fördereinrichtung (volumetrisch oder massenbestimmt) eingesetzt, welche die Druckverluste des Reaktors aufbringen kann (0-160 bar).

Vorzugsweise ist eines der Fluide, welches in den Reaktionsrohren geführt wird, eine Flüssigkeit und ein zweites Fluid, welches mit dem ersten Fluid im Reaktionsrohr gemischt wird, eine Flüssigkeit, ein Gas oder ein superkritisches Fluid. Gemäß der vorliegenden Erfindung werden beliebige Kombinationen an verschiedenen Fluiden ermöglicht, beispielsweise können Flüssig-Flüssig-Gemische, Gas-Flüssig-Gemische, Gas-superkritisches Fluid-Gemische oder Flüssig-superkritisches Fluid-Gemische eingeleitet bzw. gemischt werden. Ebenso ist es möglich, Flüssigkeiten, Gase oder superkritische Fluide mit verwirbelten bzw. fluidisierten Feststoffpartikeln zu mischen. Fluidisierte Feststoffpartikel sind beispielsweise auch Katalysatorpartikel, welche für die chemische Reaktion eingesetzt werden.

Vorzugsweise wird die vorliegende Erfindung wie folgt definiert.
1. Mikroreaktorteil mit einem Plattenkörper, der in einer Plattenseite eine nutförmige Vertiefung aufweist, in der ein Reaktionsrohr aufgenommen ist, und das Reaktionsrohr Anschlussenden an Außenseiten des Plattenkörpers aufweist.
2. Mikroreaktorteil nach Definition 1, **dadurch gekennzeichnet, dass** der Körper quaderförmig ist.
3. Mikroreaktorteil nach Definition 1 oder 2, **dadurch gekennzeichnet, dass** die Vertiefung um das Reaktionsrohr einen Kanal bildet.
4. Mikroreaktorteil nach einer der Definitionen 1 bis 3, **dadurch gekennzeichnet, dass** das Reaktionsrohr an einem Dichtungselement an der Außenseite endet, welches vorzugsweise auch die Vertiefung abschließt.
5. Mikroreaktorteil nach einer der Definitionen 1 bis 4, **dadurch gekennzeichnet, dass** die Vertiefung in der Plattenseite durch eine weitere Platte abgedichtet ist.
6. Mikroreaktorteil nach einer der Definitionen 1 bis 5, **dadurch gekennzeichnet, dass** entlang des Plattenrahmens des Plattenkörpers eine Dichtung, vorzugsweise eine Kunststoffdichtung, aufgenommen ist.
7. Mikroreaktorteil nach einer der Definitionen 1 bis 6, **dadurch gekennzeichnet, dass** der Körper Fixierungselemente zur Befestigung einer Platte oder weiterer Mikroreaktorteile an eine Plattenseite bzw. Adaptoren eines Fixierelements, vorzugsweise Einkerbungen für Zugstangen, aufweist.
8. Mikroreaktorteil nach einer der Definitionen 1 bis 7, **dadurch gekennzeichnet, dass** das Reaktionsrohr im Rohrverlauf Querschnittseinengungen von mindestens 20% der Querschnittsfläche an einer Seite des Rohrquerschnitts, vorzugsweise durch vorzugsweise Rohrknicke, und/oder Querschnittserweiterungen aufweist.
9. Mikroreaktorteil nach einer der Definitionen 1 bis 8, **dadurch gekennzeichnet, dass** die Platte mindestens zwei Reaktionsrohre, vorzugsweise in derselben, gegebenenfalls meanderförmigen, nutförmigen Vertiefung aufweist.
10. Mikroreaktorteil nach Definition 9, **dadurch gekennzeichnet, dass** die Anschlussenden an den Außenseiten des Plattenkörpers der zwei Reaktionsrohre über ein Verbindungselement ("Rohrverbinder") verbunden sind.
11. Mikroreaktorteil nach Definition 10, **dadurch gekennzeichnet, dass** das mindestens eine Verbindungselement über einen Fluideinlass oder Fluidauslass verfügt.
12. Mikroreaktorteil nach einer der Definitionen 9 bis 11, **dadurch gekennzeichnet, dass** die nutförmige Vertiefung einen meanderförmigen Verlauf hat und zwischen meanderförmigen Abschnitten des Verlaufs Trennwände vorgesehen sind, wobei die Trennwände vorzugsweise durch eine Platte zusammen mit dem Plattenrahmen des Plattenkörpers abgedichtet sind.
13. Mikroreaktorteil nach einer der Definitionen 1 bis 12, **dadurch gekennzeichnet, dass** ein Anschlussende eines Reaktionsrohres oder ein Fluideinlass oder Fluidauslass eines Steckelements einen Fluiddurchmischer aufweist.
14. Mikroreaktorteil nach Definition 13, **dadurch gekennzeichnet, dass** der Fluiddurchmischer ein Strömungsbrecher, Strömungsbeschleuniger, Mischdüsen oder eine einragende Injektionsnadel ist.
15. Mikroreaktorteil nach einer der Definitionen 1 bis 14, **dadurch gekennzeichnet, dass** in einem Reaktionsrohr oder an einem Anschlussende ein Sensor, insbesondere ein Temperatursensor, vorzugsweise in Verbindung mit einem Thermostat, optischen Sensor oder Brechungsindexsensor, vorzugsweise mit einem Messprisma, angebracht ist.
16. Mikroreaktorteil nach einer der Definitionen 1 bis 15, **dadurch gekennzeichnet, dass** ein Anschlussende eines Reaktionsrohres mit einem Überdruckregler, vorzugsweise einem Überdruckventil, einer Berstscheibe oder Pfropfen, verbunden ist.
17. Mikroreaktorteil nach einer der Definitionen 1 bis 16, **dadurch gekennzeichnet, dass** das Reaktionsrohr aus Metall, Keramik oder Kunststoff ist.
18. Reaktionsrohr mit einer Querschnittsverengung als Durchmischungselement, wobei der Querschnitt an einer Seite des Rohres, vorzugsweise rundförmigen Rohres, um mindestens 15%, vorzugsweise mindestens 20%, verengt ist.
19. Reaktionsrohr nach Definition 18, **dadurch gekennzeichnet, dass** das Rohr im Querschnitt gegenüber zu der Verengung, vorzugsweise auch 90° zu der Verengung, das Rohr nicht erweitert ist und vorzugsweise der Querschnitt gegenüber der Verengung einen Halbkreis bildet.
20. Reaktionsrohr nach Definition 18 oder 19, welches mehrere Querschnittsverengungen aufweist, wobei vorzugsweise die Seite der Querschnittsverengung in alternierender Abfolge wechselt, wobei insbesondere die Querschnittsverengungen spiralförmig oder im Rohrquerschnitt gegenüberliegend versetzt sind, und/oder die Querschnittsverengungen vorzugsweise geradförmig, prismaförmig, zylinderförmig oder kugelförmig sind.
21. Reaktionsrohr nach einer der Definitionen 18 bis 20, wobei mindestens 10% der Rohrlänge Querschnittsverengungen aufweist. Dieses Reaktionsrohr wird vorzugsweise im Mikroreaktorteil eingesetzt.
22. Mikroreaktor mit mindestens zwei Mikroreaktorteilen, jeweils mit einem Plattenkörper, der in einer Plattenseite eine nutförmige Vertiefung aufweist, in der ein Reaktionsrohr aufgenommen ist, und das Reaktionsrohr Anschlussenden an Außenseiten des jeweiligen Plattenkörpers aufweist, wobei Reaktionsrohre der verschiedenen Mikroreaktorteile über Anschlussenden über ein Verbindungselement verbunden sind.
23. Mikroreaktor nach Definition 22, **dadurch gekennzeichnet, dass** mindestens einer, vorzugsweise mindestens zwei, der Mikroreaktorteile weiters nach einer der Definitionen 1 bis 17 gekennzeichnet ist bzw. sind.
24. Mikroreaktor nach Definition 22 oder 23, **dadurch gekennzeichnet, dass** ein Reaktionsrohr eines Mikroreaktorteils, vorzugsweise aller Mikroreaktorteile, Anschlussenden aufweist, welche beide an einer Außenseite des Plattenkörpers des jeweiligen Reaktorblocks enden.
25. Mikroreaktor nach einem der Definitionen 22 bis 24, **dadurch gekennzeichnet, dass** die Reaktionsrohre durch ein Verbindungselement verbunden sind, welches optional einen Einlass oder Auslass für Reaktionsfluid in das Reaktionsrohr, und/oder einen Einlass oder Auslass für Fluid in den Kanal der Vertiefung umfasst.
26. Mikroreaktor nach einem der Definitionen 22 bis 25, **dadurch gekennzeichnet, dass** die Reaktionsrohre der verschiedenen Mikroreaktorteile durch Steckverbindungen, Rohre oder Schläuche verbunden sind.
27. Mikroreaktor nach einem der Definitionen 22 bis 26, umfassend ein thermisches Isolierelement zwischen zwei Mikroreaktorteilen.
28. Kit zum Herstellen eines Mikroreaktors nach einer der Definitionen 22 bis 27, umfassend einen Mikroreaktorteil, vorzugsweise mindestens zwei Mikroreaktorteile, nach einer der Definitionen 1 bis 17, und vorzugsweise ein Verbindungselement zum Verbinden der Reaktionsrohre der Mikroreaktorteile.
28. Verwendung eines Mikroreaktorteils nach einer der Definitionen 1 bis 17, eines Reaktionsrohrs nach einer der Definitionen 18 bis 21 oder eines Mikroreaktors nach einer der Definitionen 22 bis 27 zum Durchmischen zweier Fluide in den Reaktionsrohren.
29. Verwendung nach Definition 28, **dadurch gekennzeichnet, dass** die beiden Fluide eine Emulsion oder Dispersion bilden.
30. Verwendung nach Definition 27 oder 28, um zusätzlich eine chemische Reaktion der beiden Fluide zu bedingen.
31. Verwendung nach einer der Definitionen 28 bis 30, **dadurch gekennzeichnet, dass** ein Mikroreaktor mit mindestens zwei Mikroreaktorteilen verwendet wird und die Reaktionsrohre der Mikroreaktorteile auf unterschiedliche Temperaturen erwärmt oder gekühlt werden, vorzugsweise durch ein Wärmeträgermedium, vorzugsweise Wasser, welches in den nutförmigen Vertiefungen geführt wird.
32. Verwendung nach Definition 31, **dadurch gekennzeichnet, dass** das Wärmeträgermedium im Gegenstrom oder im Gleichstrom zu dem Reaktionsgemisch im Reaktionsrohr geführt wird.
33. Verwendung nach einer der Definitionen 28 bis 32, **dadurch gekennzeichnet, dass** an der Mischstelle der beiden Fluide diese mit unterschiedlichen Geschwindigkeiten gemischt werden, vorzugsweise bei mindestens 2-fachen, vorzugsweise mindestens 3-fachen, insbesondere mindestens 4-fachen, Geschwindigkeitsunterschieden.
34. Verwendung nach einer der Definitionen 28 bis 33, **dadurch gekennzeichnet, dass** an der Mischstelle der beiden Fluide diese im Winkel von 140° bis 220°, vorzugsweise 160° bis 200°, insbesondere bevorzugt 180°, aufeinandertreffen.
35. Verwendung nach einer der Definitionen 28 bis 34, **dadurch gekennzeichnet, dass** an der Mischstelle die Geschwindigkeit der beiden Fluide durch den Druck und den Querschnitt einer Mischdüse, vorzugsweise durch Auswahl einer Lochblende mit einer bestimmten Anzahl an Löcher, eingestellt wird.
36. Verwendung nach einer der Definitionen 28 bis 35, **dadurch gekennzeichnet, dass** der Eingangsdruck eines Fluids mindestens 1 bar, vorzugsweise mindestens 5 bar, im Speziellen bevorzugt mindestens 10 bar, ist.
37. Verwendung nach einer der Definitionen 28 bis 36, **dadurch gekennzeichnet, dass** eines der Fluide eine Flüssigkeit ist und ein zweites Fluid eine Flüssigkeit, ein Gas oder ein superkritisches Fluid ist.

Die vorliegende Erfindung wird weiters durch die nachgestellten Figuren und Beispiele näher erläutert ohne auf diese beschränkt zu sein.

In den Figuren zeigen:
Fig. 1 eine dreidimensionale Ansicht eines zusammengesetzten Mikroreaktors aus mehreren Mikroreaktorteilen, welche durch Verbindungselemente verknüpft sind;
Fig. 2 eine Seitenansicht des Reaktors;
Fig. 3 einen Schnitt durch die Frontansicht des Reaktors durch verschiedene Verbindungssteckelemente;
Fig. 4 einen Querschnitt durch den Reaktor, in dem die einzelnen Vertiefungen mit den Reaktionsrohren sichtbar sind;
Fig. 5a eine Aufsicht auf einen Mikroreaktorteil, in dem die Vertiefungen und Reaktionsrohre an einer Plattenseite gezeigt werden;
Fig. 5b eine alternative Ansicht einer Aufsicht auf einen Mikroreaktorteil;
Fig. 6 einen Schnitt durch die Verbindung eines Reaktionsrohres mit einem Verbindungselement in der Seitenansicht;
Fig. 7a, b, c Reaktionsrohre mit Querschnittsverengungen und Querschnittserweiterungen;
Fig. 8 eine einseitige Querschnittsverengung eines Reaktionsrohres;
Fig. 9 einen Schnitt durch ein Verbindungselement in der Aufsicht, wobei dieses Verbindungselement einen zusätzlichen Fluideinlass bzw. Fluidauslass aufweist;
Fig. 10 einen Verbindungsteil mit einer Mischlanze mit mehreren Löchern, welche in das Reaktionsrohr einragen;
Fig. 11 a) ein Verbindungssteckelement, b) ein Verbindungssteckelement mit einem zusätzlichen Fluidein- bzw. -auslass und c) einen Verbindungsblock ohne Rohrverbinder mit zwei Ein- bzw. Auslässen für nebeneinanderliegende Reaktionsrohre;
Fig. 12 eine Seitenansicht des Mikroreaktors, welcher auf einer Transport- bzw. Montagehalterung aufgebracht ist;
Fig. 13 eine Frontansicht eines Mikroreaktors mit einer bestimmten Verbindungszusammenstellung einzelner Reaktionsrohre, die angegebenen Nummern beziehen sich auf Positionen auf die in Beispiel 2 und 3 verwiesen wird; und
Fig. 14 eine Lochscheibe als Mischelement zum Einsatz in einer Mischdüse, welche Mischlanzen mit unterschiedlichen Längen zeigt, a) Querschnittsaufsicht, b) Schnitt-Seitenansicht.

### Beispiele:

### Beispiel 1: Beschreibung des Aufbaues

Der Mikroreaktor zeichnet sich durch einen modularen Aufbau aus, wodurch Parameter wie Verweilzeit etc. an die verschiedensten Reaktionen angepasst werden können.

Eine Modulplatte bzw. ein Mikroreaktorteil 1 besteht aus einem Plattenkörper, in welchem die Reaktionsrohre 21 in Vertiefungen 22 geführt werden. Die Reaktionsrohre 21 werden durch U-förmige Halterungen 24 in den Vertiefungen 22 stabilisiert. Die Rohre werden auf der Frontseite mit den Reaktionsmedien angespeist. Die Vertiefungen in dem Plattenkörper 1 dienen als Leitung für die Kühl- bzw. Heizflüssigkeit, um die für die Reaktion notwendigen Temperaturen einzustellen. Der Mikroreaktor ist wie ein Wärmetauscher ausgeführt, und der Kühl- bzw. Heizbetrieb kann im Gleich- als auch im Gegenstrom betrieben werden. Die Anspeisung 9, 10 für die Heizmedien erfolgt auf der linken und rechten Seite des Plattenkörpers. Die Anschlüsse können derart ausgeführt sein, dass die Bohrungen am höchsten Punkt der Vertiefung sind und dadurch etwaige Luft entweichen kann. An der Frontseite sind die Rohrverbinder 20 angebracht, welche flexibel positioniert werden können. Durch Einsatz von Rohrbügeln 8 kann die Rohrlänge spezifisch der Reaktion angepasst werden. Die Rohrbügel 8 dienen auch als Verbindungen zwischen den einzelnen Modulen.

Der Mikroreaktor kann beispielsweise für die Reaktion von mehreren Reaktanden in mehreren Stufen vorgesehen werden, z.B.:.
1. Aufwärmen der Reaktionsmedien auf Reaktionstemperatur(1. Modul)
2. Reaktion der Medien(2. - 4. Modul)
3. Verdünnung der Lösung und Stoppen der Reaktion (5. Modul)

Die einzelnen Reaktionsrohrabschnitte oder Mikroreaktorteile stellen dabei eigene Module dar.

Die Module 1 - 4 befinden sich in einer funktionellen Ebene, da sie auf demselben Temperaturniveau arbeiten. Das 5. Modul grenzt nicht direkt an das 4. Modul, wenn ein anderes Temperaturniveau vorliegt. Es kann durch Abstandhalter 3 und Isolierplatte 2 räumlich getrennt werden.

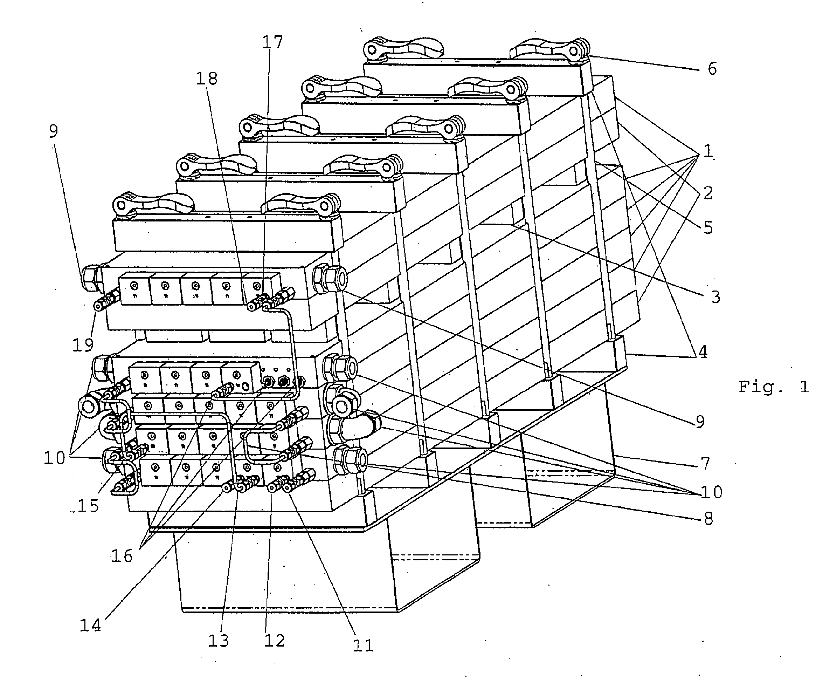

In der speziellen Ausführungsform eines Reaktors gemäß Fig. 1 wird beispielsweise der Aufbau einzelner Mikroreaktorteile 1 bzw. Module gezeigt, welche beispielsweise durch Deckmodule 2 bzw. Isolierkörper 3 getrennt sein können. Die einzelnen Mikroreaktorteile und Platten-Isolierkörper werden durch Fixierbügel 4 gehalten, welche durch Zugstangen 5 und Knebelspanner 6 fixiert werden. Unter dem Reaktor befindet sich ein Fuß in Form einer Hubwagenaufnahme 7. Die einzelnen Mikroreaktorteile werden durch Verbindungselemente ("Plattenverbinder") 8 verbunden. Einzelne Reaktionsrohre innerhalb eines Plattenkörpers werden beispielsweise durch Rohrverbindungselemente in Form von Verbindungsblöcken 20 verbunden. Die einzelnen Platten können Kühlmittel-Zu- bzw. -abflüsse 9 bzw. Heizmittel-Zu- oder -abflüsse 10 aufweisen. Diese Kühl- bzw. Heizmittel als Wärmeträgermedium werden in den Vertiefungen 22 durch die Platten geführt. Der Mikroreaktor kann mehrere Reaktionsmittelein- und -zuläufe haben, wie beispielsweise einen Einlauf für ein Fluid A 11, Einlauf für ein Fluid B 12, einen Auslass für ein Gemisch A/B 13, einen Einlauf für ein Reaktionsfluid C 14, einen Zulauf für das Reaktionsgemisch A/B 15 in einer weiteren Platte; alternativ einen Auslauf für ein Gemisch A/B/C (hier: freies Anschlussende 16), einen Zulauf für das Gemisch A/B/C 17 in einer weiteren Platte, einen Zulauf für das Reaktionsmedium D 18 und einen Produktablauf 19.

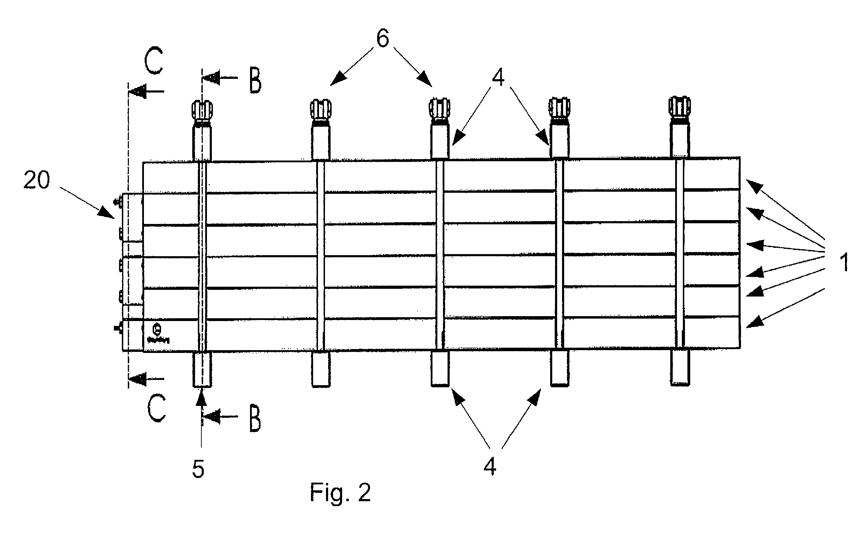

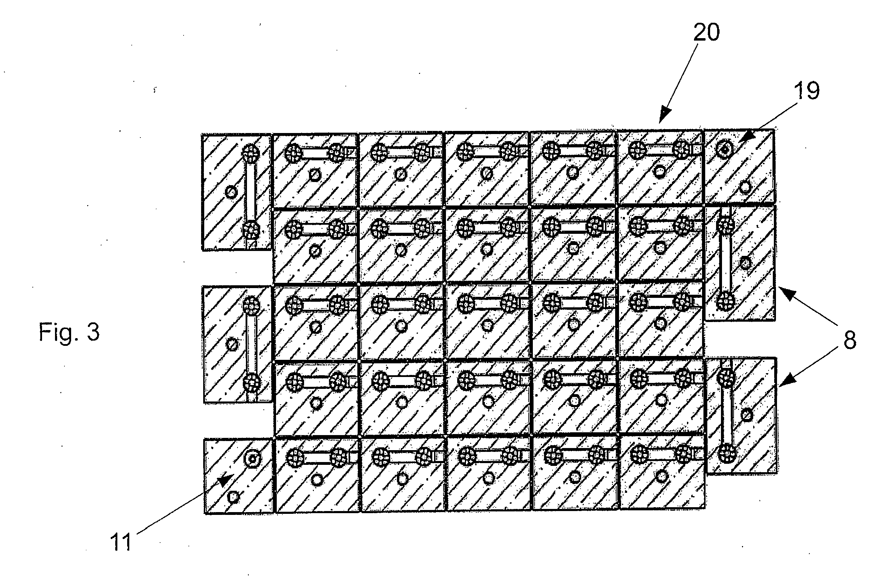

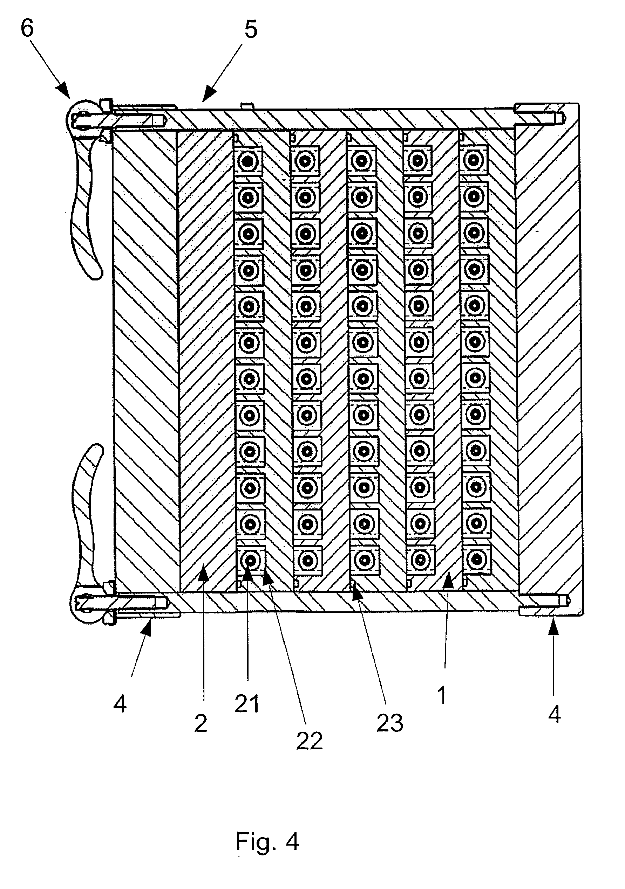

Fig. 2 zeigt eine schematische Seitenansicht dieses Reaktors mit sechs verschiedenen Plattenkörpern 1, in dem Schnitte C (Fig. 3) und B (Fig. 4) eingezeichnet sind.

Fig. 3 zeigt den Schnitt durch verschiedene Verbindungselemente zur Verbindung der Rohre der Platten (Rohrverbinder) 20. Die einzelnen Platten sind durch Plattenverbinder 8 verbunden.

Gemäß Fig. 4 wird ein Querschnitt durch einen Reaktor aus fünf verschiedenen Platten gezeigt, der bildhaft darstellt, wie die Reaktionsrohre 21 in den nutförmigen Vertiefungen 22 eingebettet sind. Die einzelnen Platten können durch Abdichtungen 23 abgedichtet werden.

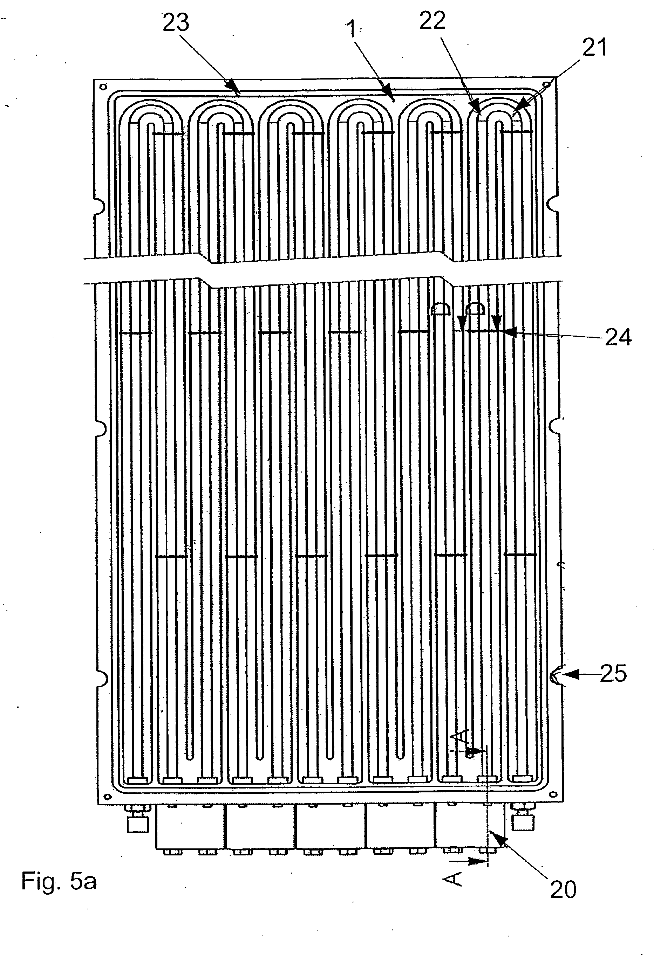

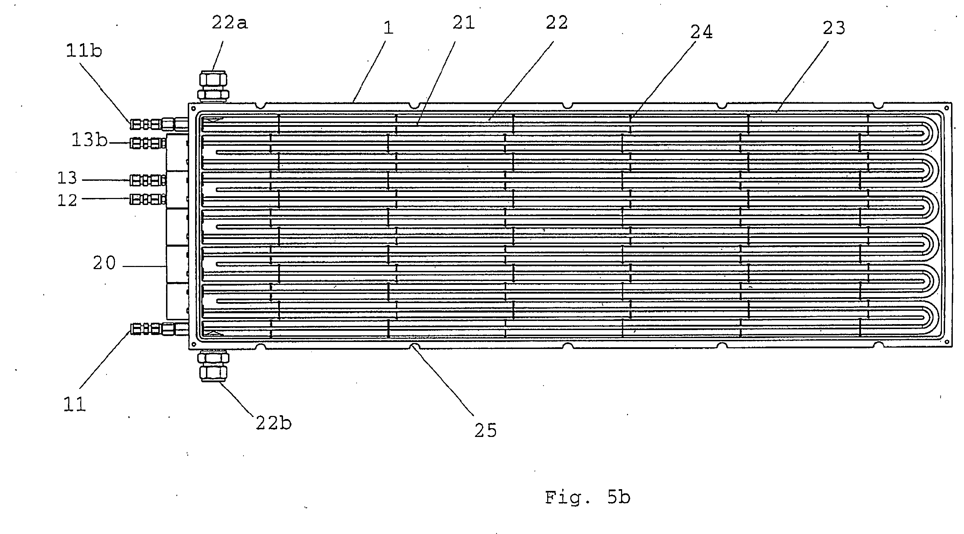

Wie aus Fig. 5a hervorgeht, können die einzelnen Rohre in den Vertiefungen durch Halterungen 24 fixiert werden. Zur Fixierung der einzelnen Platten durch die Zugstangen 5 werden Einkerbungen 25 zu deren Fixierung vorgesehen. Fig. 5b zeigt zusätzlich eine Einspeise-/Auslaufstelle 11 des Moduls, eine Einlaufstelle 12, eine Auslaufstelle 13, einen Mischeinlauf 13b und eine Einspeise-/Auslaufstelle 11b des Moduls. Zusätzlich ist ein Wärmeträgermediumzulauf 22b bzw. Wärmeträgermediumablauf 22a eingezeichnet.

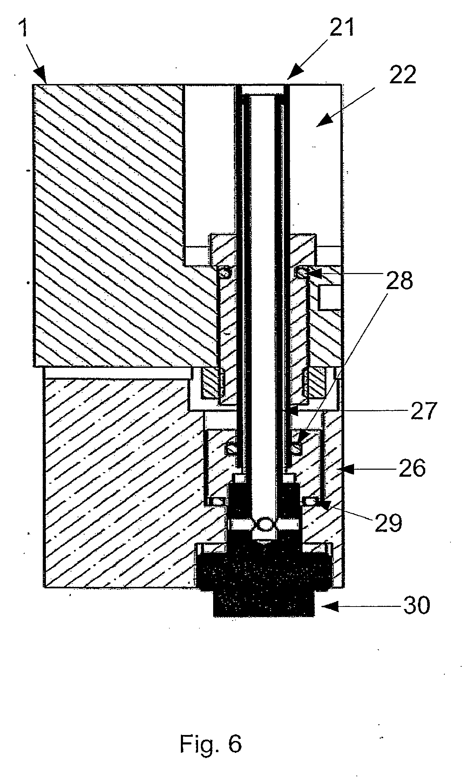

Fig. 6 zeigt einen Querschnitt in der Seitenansicht durch ein Verbindungselement wie es an einen Plattenkörper 1 angebracht ist. Hierbei wurde ein Verbindungsstück der Rohre 21 vorgesehen, welches in die Tiefe zu einem weiteren Rohr führen könnte. Das Verbindungselement ist hierbei als Verbindungsblock 26 dargestellt, welcher ein Rohr 27 aufweist, welches in das Reaktionsrohr der Platte 21 ragt. Abgedichtet ist dieses Rohr 27 durch ein Verteilelement 30. In dem Verteilelement 30 werden Bohrungen vorgesehen, so dass Fluide aus unterschiedlichen Richtungen (Winkeln) dem Reaktor zugeführt werden können. Die einzelnen Anschlussstellen werden durch Dichtungen 28, 29 abgedichtet, welche als Zugdichtung 28 oder Druckdichtung 29 geartet sein können.

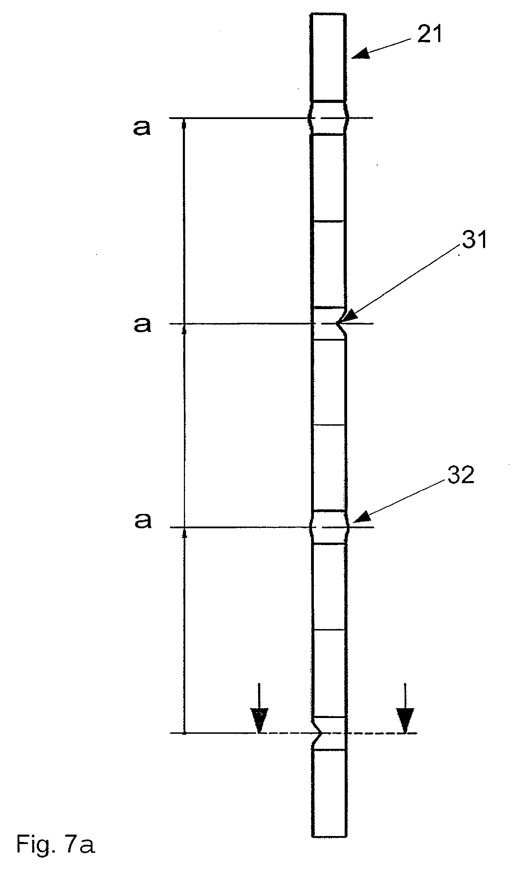

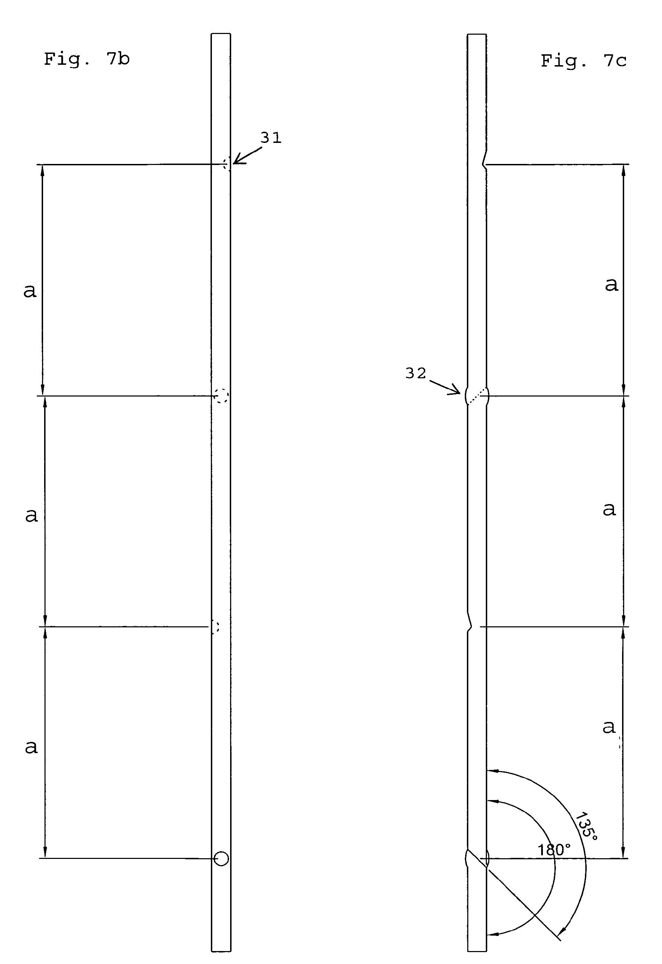

Fig. 7a zeigt ein Reaktionsrohr 21 mit Querschnittsverengungen 31 bzw. Querschnittserweiterungen 32. Diese sind vorzugsweise durch regelmäßige Abstände a, z.B. 50 mm, beabstandet; Fig. 7b zeigt ein Reaktionsrohr mit runden bzw. kugelförmigen Querschnittsverengungen; und Fig. 7c zeigt ein Reaktionsrohr mit rundförmigen Querschnittserweiterungen und schrägen Querschnittsverengungen in einem schrägen Winkel zum Querschnitt des Reaktionsrohrs.

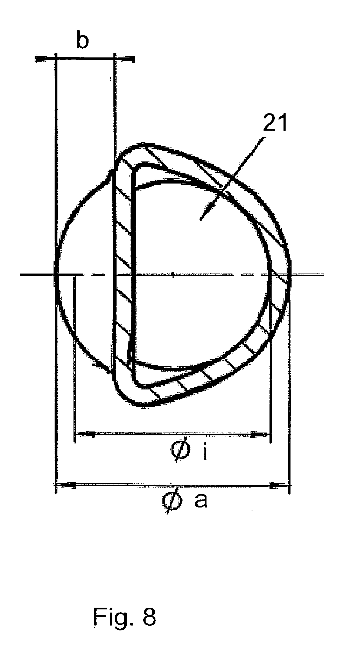

Fig. 8 zeigt einen Querschnitt durch eine Querschnittsverengung, mit einem Innendurchmesser i (z.B. 5 mm, einem Außendurchmessser a (z.B. 6 mm) und die Querschnittsverengung b (z.B. 1,51 mm). Selbstverständlich können auch andere Maße für eine Querschnittsverengung vorgesehen werden.

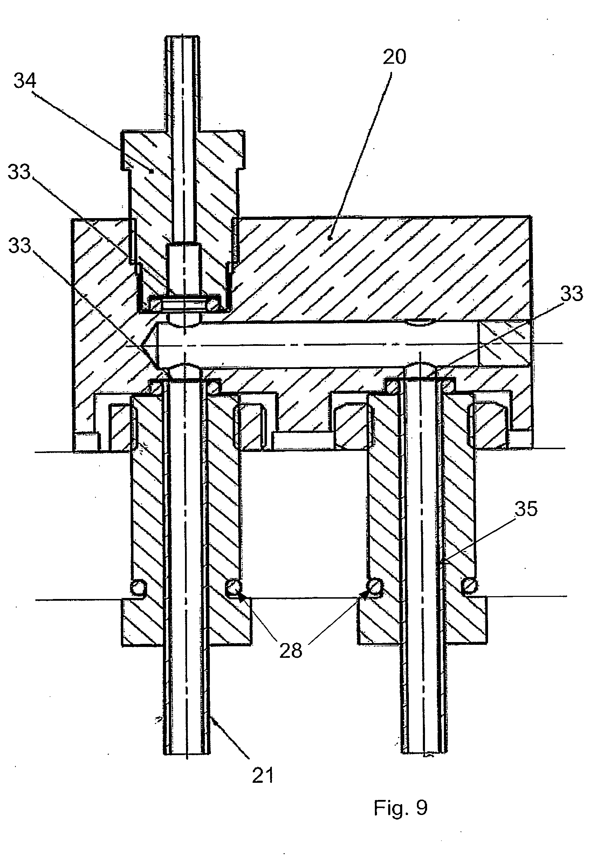

In Fig. 9 wird ein Verbindungselement 20 gezeigt, welches Rohre 21 verbindet. Zusätzlich ist hier eine Ein- bzw. Auslaufstelle 34 vorgesehen. Die Rohre 21 sowie die Einlaufstelle 34 führen über Mischdüsen 33, welche als Lochscheiben ausgeführt sind, in einen gemeinsamen Kanal in eine Einlaufstelle in ein daneben befindliches Rohr 35.

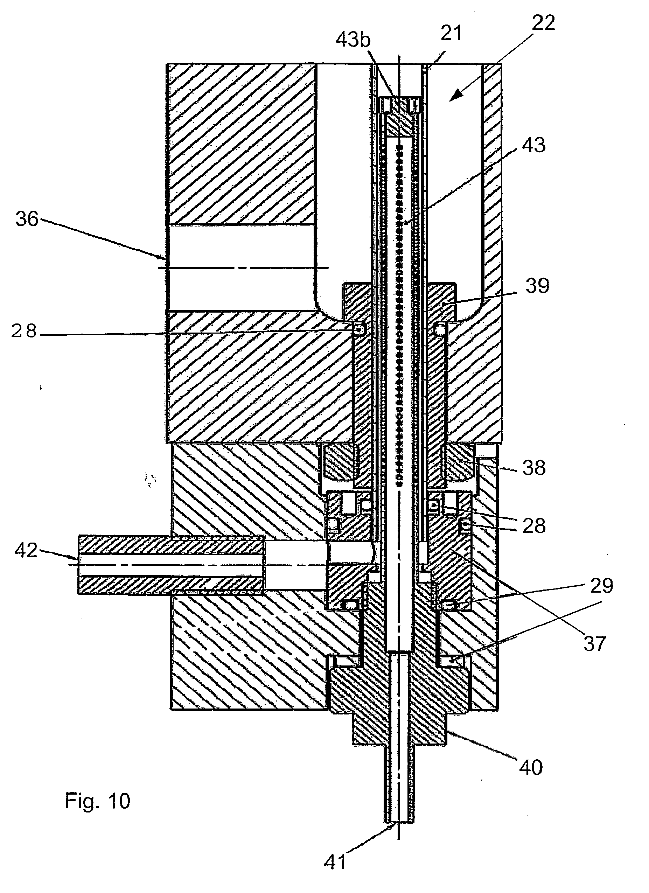

Gemäß Fig. 10 wird eine Einlaufstelle 40 gezeigt, wo über ein Einlaufrohr 41 über ein Verbindungsblockelement 37 eine Injektionslanze 43 gezeigt wird, welche durch ein Zentrierstück 43b abgeschlossen ist und durch verschiedene Löcher in das Rohr 21 führt. Durch die Verwendung mehrerer Löcher wird eingelassenes Fluid an verschiedenen Stellen kontinuierlich in das Rohr 21 geführt. Das Rohr 21 führt direkt in ein weiteres Verbindungsrohr 42. Die Vertiefungen 22 mit dem Wärmeträgermedium können über eine Anschlussstelle 36 mit nebenliegenden Rohren verbunden werden bzw. ein- bzw. ausgeführt werden. Das Rohr 21 wird durch eine Buchse 39 und eine Schraubenmutter 38 fixiert.

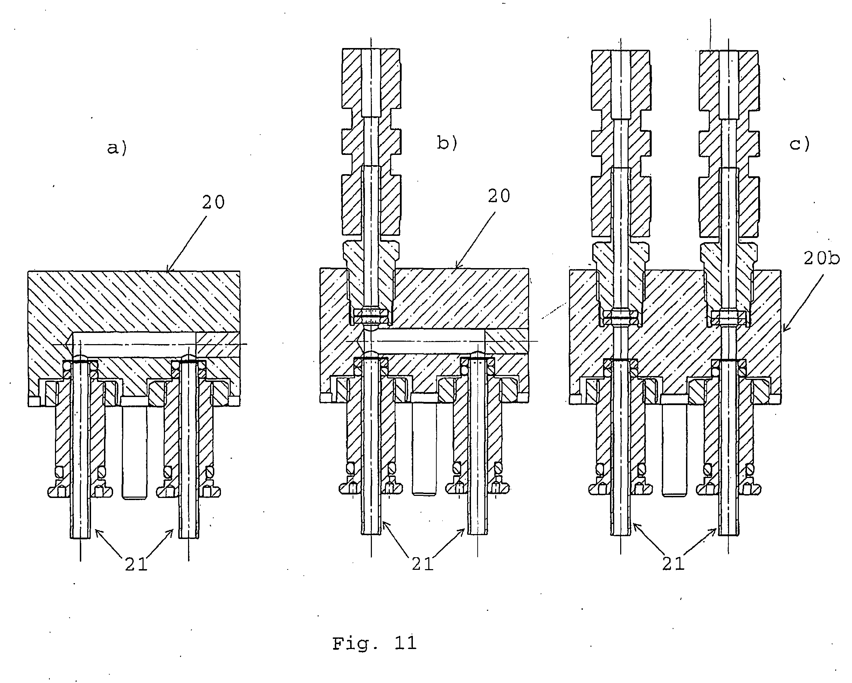

In Fig. 11 sind drei verschiedene Steckelemente a), b), c) gezeigt, welche einerseits als einfache Steckverbindung a) zwischen den Rohren 21 ausgeführt ist. Gemäß der Ausführung b) befindet sich zusätzlich noch eine Fluidein- bzw. -auslaufstelle in dem Steckelement 20. Das Steckelement 20b ist gemäß Fig. 11 Ausführung c) nicht als Verbindungselement ausgeführt, sondern als Ein- bzw. Auslass für zwei benachbarte Rohre.

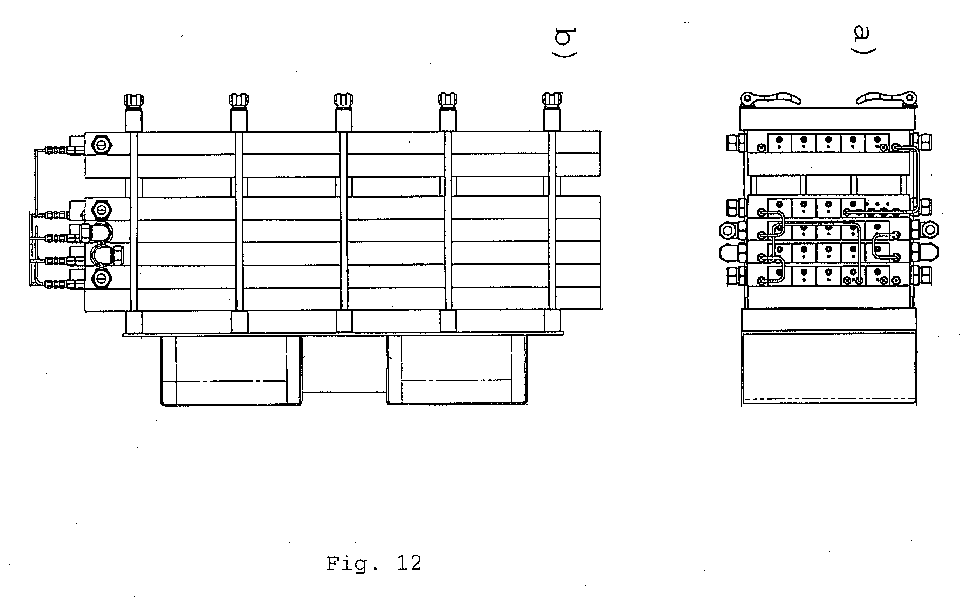

In Fig. 12 wird eine Front- und Seitenansicht des in Fig. 1 gezeigten Mikroreaktors dargestellt.

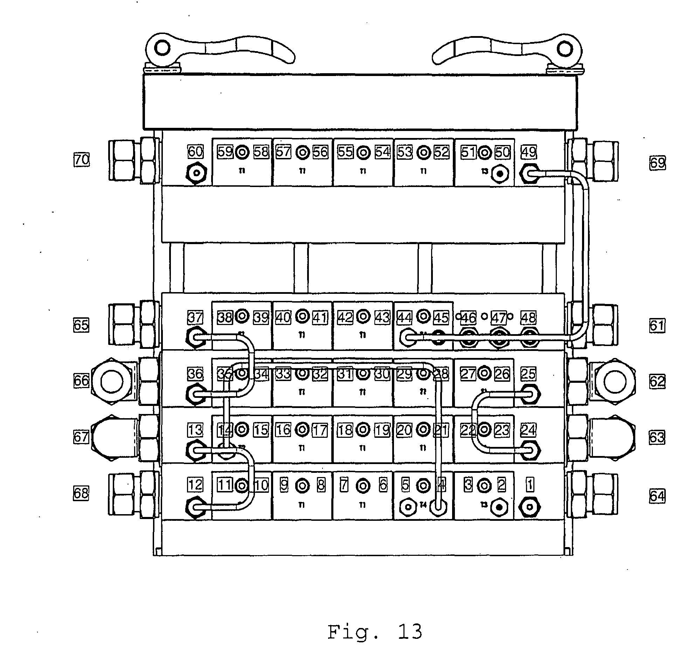

Fig. 13 zeigt eine Frontansicht eines speziell verbundenen Mikroreaktors mit eingezeichneten Positionen 1-70. Hierin ist gemäß Position 1 ein Fluideinlauf eines Fluids A gezeigt (11 in Fig. 1). Gemäß Position 2 wird Fluid B zugeführt. Das Rohr in Position 3 dient der Aufwärmung des Fluid A/B-Gemisches. Position 4 zeigt den A/B-Ablauf. Position 5 den Reaktionsmedium-C-Einlauf. Positionen 6-12 zeigen Rohre zur Aufwärmung von Fluid C. Das erste Modul von unten dient also dem parallelen Aufwärmen von A/B und C. Von Position 12 zu Position 13 wird Fluid C in das zweite Modul geführt. In Position 14 wird das Fluid A/B Gemisch dem zweiten Modul zugeführt. Die Rohre der Positionen 15-49 dienen der chemischen Reaktion A/B/C. In Position 50 wird Fluid D zugeführt. Die Rohre der Positionen 51-59 dienen der Reaktion bzw. dem Abbruch einer Reaktion, sofern Fluid D ein Reaktionsabbrecher ist, und der Temperierung. Position 60 zeigt den Produktabfluss. Gemäß den Positionen 61-68 wird Heizmedium zu- bzw. abgeführt und gemäß den Positionen 68 und 70 Kühlmedium zu- oder abgeführt.

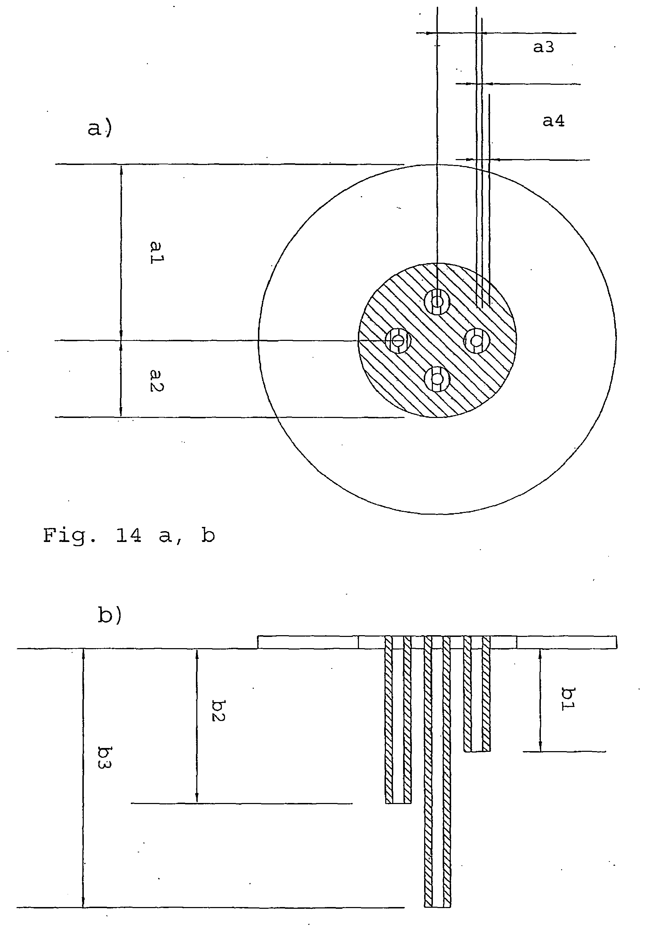

Fig. 14 zeigt Mischlanzen in Form von vier verschiedenen Injektionsnadeln, welche durch eine Mischdüse in Form einer Lochscheibe ragen. Durch die stufenweise Versetzung der Injektionsnadeln mit verschiedenen Abständen (b1, b2, b3) können verschiedene Mischbereiche angesteuert werden.

### Beispiel 2: Funktionsweise

### Speisung

Für eine Reaktion eines gemäß Fig. 13 verschalteten Mikroreaktors werden die benötigten Chemikalien über Pumpen an die im 1. Modul vorgesehenen Einspeisestellen bzw. Mischstellen befördert, von welchen sie in den Mikroreaktor gelangen.

**Einspeisestellen:**

| | |
|---|---|
| Fluid A | Position 1 |
| Fluid B | Position 2 (Mischstelle) |
| Fluid C | Position 5 |
| Fluid D | Position 50 (Mischstelle) |

Die Speisung mit Kühl-/Heizmedium erfolgt mittels Pumpen, und das Medium tritt an der Längsseite durch eine ¾ Zoll Swagelokverschraubung ein und auf der gegenüberliegenden Seite aus (Pos. 61-70). Die Module 1-4 werden über eine gemeinsame Speiseleitung für die Heizflüssigkeit versorgt, da die Module im gleichen Temperaturbereich betrieben werden. Die Speisung im fünften Modul erfolgt über eine eigene Leitung, sofern das Temperaturniveau unterschiedlich ist.

### Vermischung

Die Vermischung der Reaktionsteilnehmer erfolgt in einem Gegenstrommischer, in welchem die Reaktanden mit deutlich erhöhten Geschwindigkeiten aufeinanderprallen. Die Geschwindigkeitserhöhung wird durch Mischplättchen erreicht. Die vermischten Reaktanden gelangen durch ein weiteres Mischplättchen in das Reaktionsrohr zurück.

Mischstellen finden sich an folgenden Positionen:

| | |
|---|---|
| Mischstelle 1 | Position 2 |
| Mischstelle 2 | Position 14 |
| Mischstelle 3 | Position 50 |

### Reaktion

Die Reaktion wird in Position 14 gestartet, indem an dieser Position Fluid C dem Fluid A/B-Gemisch durch einen Gegenstrommischer zugemischt wird. Durch die Anzahl der Rohre bzw. Module kann die benötigte Verweilzeit eingestellt werden.

### Verdünnung

Durch die Zugabe von Fluid D an Position 50 wird die Reaktion durch Verdünnung und Temperaturänderung abgebrochen. Die Vermischung der beiden Ströme erfolgt wiederum in einem Gegenstrommischer.

### Produktaustrag

Das Produkt wird an Position 60 mit einer Temperatur von ca. 40°C ausgetragen.

Das Öffnen des Apparats sollte nur nach vorhergehender Entleerung der Reaktionsräume bzw. des Kühlkreislaufes durchgeführt werden. Um den Apparat zu öffnen, werden die Knebelspanner gelöst und mit diesen die Fixierstangen aufgeschraubt. Anschließend können die Fixierstangen und Fixierbügel vom Reaktor abgenommen werden. Der Reaktor kann jetzt durch Abnahme der einzelnen Module geöffnet werden.

Beim Zusammenbau sind die Reaktormodule wieder exakt übereinander zu legen und zu überprüfen, dass die Module bündig und dichtend abschließen.

Anschließend werden die Fixierstangen, Fixierbügel und Knebelspanner auf den Reaktor aufgesetzt und die Fixierstangen mittels des Knebelspanners vorgespannt und anschließend der Knebel umgelegt.

### Beispiel 3: Betriebswerte

Im folgenden Beispiel wird unter Hinweis auf die Parameterwerte der unten angestellten Tabelle 1 bestimmte Durchflussraten und Druckverhältnisse beispielhaft angegeben. Der erfindungsgemäß ausgeführte Mikroreaktor wurde mit Reaktionsrohren der Durchmesser (2) bestückt und mit den entsprechenden Massendurchsätzen (1) betrieben. Das spezifische Oberflächen/Volumenverhältnis (3) wurde auf Basis der Reaktorauslegung und der Geometrie errechnet.

**Tabelle 1: Parameter**

| | | | | |
|---|---|---|---|---|
| 1 | **Durchsatz [kg/h]** | **0,1** | **1** | **8** |
| 2 | **Innendurchmesser Rohr [mm]** | **1** | **3** | **5,00** |
| 3 | **Oberfläche/Volumen [m²/m³]** | **4000** | **1333,33** | **800,00** |
| | | | | |

| | **Leerrohrgeschwindigkeit [m/s]** | | | |
|---|---|---|---|---|
| 4 | Fluid A | 0,40 | 0,44 | 1,27 |
| 5 | Fluid B | 0,03 | 0,04 | 0,11 |
| 6 | Mischung 1 | 0,43 | 0,48 | 1,38 |
| 7 | Fluid C | 0,29 | 0,32 | 0,93 |
| 8 | Mischung 2 | 0,72 | 0,80 | 2,31 |
| 9 | Fluid D | 0,35 | 0,39 | 1,13 |
| 10 | Produkt | 1,07 | 1,19 | 3,44 |

| | **Geschwindigkeitsverhältnis an Düse [v2/v1]** | | | |
|---|---|---|---|---|
| 11 | Fluid A | | 4,50 | |
| 12 | Fluid B | | 75,00 | |
| 13 | Mischung 1 | | 4,50 | |
| 14 | Fluid C | | 7,20 | |
| 15 | Mischung 2 | | 4,50 | |
| 16 | Fluid D | | 7,20 | |
| 17 | Produkt | | 4,50 | |

| | **Volumenstrom/ Oberfläche [l/hm²]** | | | |
|---|---|---|---|---|
| 18 | Fluid A | 257 | 771 | 1286 |
| 19 | Mischung 1 | 280 | 841 | 1402 |
| 20 | Fluid C | 38 | 113 | 189 |
| 21 | Mischung 2 | 29 | 88 | 147 |
| 22 | Produkt | 140 | 419 | 699 |

| | **Reynoldszahl** | | | |
|---|---|---|---|---|
| 23 | Fluid A | 1326 | 4421 | 21221 |
| 24 | Mischung 1 | 88 | 293 | 1407 |
| 25 | Fluid C | 265 | 884 | 4244 |
| 26 | Mischung 2 | 221 | 735 | 3529 |
| 27 | Produkt | 414 | 1381 | 6629 |
| | | | | |
| | | | | |
| | **Druckverlust gesamt [bar]** | **33,0** | **4,5** | **13,73** |
| | | | | |

| 28 | **Druckverlustanteil [%]** | | | |
|---|---|---|---|---|
| 29 | Fluid A | 0 | 1 | 2 |
| 30 | Mischung 1 | 4 | 4 | 4 |
| 31 | Fluid C | 3 | 3 | 3 |
| 32 | Mischung 2 | 70 | 69 | 68 |
| 33 | Produkt | 23 | 23 | 23 |
| | | | | |

| 34 | **Nusseltzahl** | | | |
|---|---|---|---|---|
| 35 | Fluid A | 1,5 | 22,8 | 101,00 |
| 36 | Mischung 1 | 25,0 | 33,6 | 44,84 |
| 37 | Fluid C | 5,9 | 6,2 | 37,44 |
| 38 | Mischung 2 | 16,5 | 17,3 | 50,17 |
| 39 | Produkt | 12,1 | 14,1 | 89,86 |

Dem Mikroreaktor wurde das Fluid A an Position 1 mittels Druckpumpe zugeführt und mit einer Leerrohrgeschwindigkeit v1 (4) in den ersten Reaktionsrohren zur Position 2 (Mischstelle) weitertransportiert.

Vor Vermischung von Fluid A mit Fluid B wurde Fluid A über eine Mischdüse zur Anpassung der Strömungsgeschwindigkeit geleitet.

Das durch die Mischdüse eingestellte Geschwindigkeitsverhältnis v2/v1 betrug Werte wie unter (11) dargestellt. In Position 2 (Mischstelle) wurde das Fluid B mit einer Leerrohrgeschwindigkeit (5) zugeführt. Zur Steigerung der ersten Leerrohrgeschwindigkeit wurde Fluid B ebenfalls über eine Mischdüse geleitet. Das durch die Mischdüse eingestellte Geschwindigkeitsverhältnis v2/v1 nahm Werte an wie unter (12) dargestellt. Die erhaltene Mischung 1 wurden mit einer Leerrohrgeschwindigkeit (6) über Verbindungsstücke weitertransportiert und zur Steigerung der Fluidgeschwindigkeit über eine Mischdüse geleitet. Das durch die Mischdüse eingestellte Geschwindigkeitsverhältnis v2/v1 betrug wie unter (13) dargestellt.

Fluid C wurde in Position 5 des Reaktors mit einer Leerrohrgeschwindigkeit (7) zur Temperierung eingespeist und zur intensiven Vermischung der Fluidmischung 1 (gebildet aus Fluid A und Fluid B) zur Mischstelle 2 - Position 14 geführt. Zur Steigerung der ersten Leerrohrgeschwindigkeit wurde Fluid C ebenfalls über eine Mischdüse geleitet. Das durch die Mischdüse eingestellte Geschwindigkeitsverhältnis v2/v1 betrug wie unter (14) dargestellt. Die erhaltene Fluidmischung 2 wurde mit einer Leerrohrgeschwindigkeit (8) weitertransportiert und zur Steigerung der Fluidgeschwindigkeit über eine Mischdüse geleitet. Das durch die Mischdüse eingestellte Geschwindigkeitsverhältnis v2/v1 betrug wie unter (15) dargestellt. Die erhaltene Mischung 2 wurde nach einer exakt eingestellten Verweilzeit unter Temperierung aus Reaktorpositionen , vor Position 50 liegend, nach erfolgter Reaktion abgenommen und Mischstelle 3 - Position 50 - zugeführt. Fluid D wurde in Position 50 des Reaktors mit einer Leerrohrgeschwindigkeit (9) zur intensiven Vermischung der Fluidmischung 2 (gebildet aus Fluid A und Fluid B und Fluid C) zur Mischstelle 3 zugeführt. Zur Steigerung der ersten Leerrohrgeschwindigkeit (9) wurde Fluid D ebenfalls über eine Mischdüse geleitet. Das durch die Mischdüse eingestellte Geschwindigkeitsverhältnis v2/v1 betrug wie unter (16) dargestellt. Das erhaltene Produktfluid wurden mit einer Leerrohrgeschwindigkeit (10) weitertransportiert und zur Steigerung der Fluidgeschwindigkeit über eine Mischdüse geleitet. Das durch die Mischdüse eingestellte Geschwindigkeitsverhältnis v2/v1 betrug wie unter (16) dargestellt. Das erhaltene Produkt wurde über eine weitere Mischdüse zur Geschwindigkeitseinstellung (17) geführt, nach einer exakt eingestellten Verweilzeit unter Temperierung bzw. Wärmeabfuhr aus der letzten Reaktorposition abgenommen und der weiteren Verarbeitung zugeführt.

Die verfahrenstechnischen Kennziffern Volumenstrom / Oberfläche der Einzelfluide, Mischungen und Produkte sind beispielshaft von (18 - 22) dargestellt.

Die sich aus den Rohrströmungen ergebenden Reynoldszahlen, dargestellt von (23-25) liegen im Bereich von 80 bis 22.000.

Der Gesamtdruckverlust über den Reaktorbereich bewegt sich in Anhängigkeit des Durchsatzes im Bereich von 4 bis 33 bar, wobei die zum Gesamtdruckverlust beitragenden Einzeldruckverluste der Fluide und Mischungen 1 bis 70 % des Gesamtdruckverlustes betragen können.

Die sich durch Wärmeübertragungsvorgänge errechnenden Nusselt Zahlen liegen je nach Fluid und Mischung, sowie des Produktes im Bereich von 1 -200.

## Patentansprüche

1. Mikroreaktorteil mit einem Plattenkörper (1), der in einer Plattenseite eine nutförmige Vertiefung (22) aufweist, in der ein Reaktionsrohr (21) aufgenommen ist, und das Reaktionsrohr Anschlussenden (16) an Außenseiten des Plattenkörpers (1) aufweist.

2. Mikroreaktorteil nach Anspruch 1, **dadurch gekennzeichnet, dass** der Plattenkörper (1) quaderförmig ist.

3. Mikroreaktorteil nach Anspruch 1 oder 2, **dadurch gekennzeichnet, dass** der Plattenkörper (1) mindestens zwei Reaktionsrohre (21), vorzugsweise in derselben, gegebenenfalls meanderförmigen, nutförmigen Vertiefung (22) aufweist.

4. Mikroreaktorteil nach Anspruch 3, **dadurch gekennzeichnet, dass** die Anschlussenden (16) an den Außenseiten des Plattenkörpers der zwei Reaktionsrohre über ein Verbindungselement (20) verbunden sind, wobei vorzugsweise mindestens ein Verbindungselement (20) über einen Fluideinlass oder Fluidauslass (41) verfügt.

5. Mikroreaktorteil nach Anspruch 3 oder 4, **dadurch gekennzeichnet, dass** die nutförmige Vertiefung (22) einen meanderförmigen Verlauf hat und zwischen meanderförmigen Abschnitten des Verlaufs Trennwände vorgesehen sind, wobei die Trennwände vorzugsweise durch eine Platte zusammen mit dem Plattenrahmen des Plattenkörpers (1) abgedichtet sind.

6. Mikroreaktorteil nach einem der Ansprüche 1 bis 5, **dadurch gekennzeichnet, dass** ein Anschlussende (16) eines Reaktionsrohres oder ein Fluideinlass oder Fluidauslass eines Verbindungselements (20) einen Fluiddurchmischer aufweist, wobei vorzugsweise der Fluiddurchmischer ein Strömungsbrecher, Strömungsbeschleuniger, Mischdüsen oder eine einragende Injektionsnadel ist.

7. Reaktionsrohr mit einer Querschnittsverengung (31) als Durchmischungselement, wobei der Querschnitt an einer Seite des Rohres, vorzugsweise rundförmigen Rohres, um mindestens 15%, vorzugsweise mindestens 20%, verengt ist.

8. Reaktionsrohr nach Anspruch 7, **dadurch gekennzeichnet, dass** das Rohr (21) im Querschnitt gegenüber zu der Verengung, vorzugsweise auch 90° zur Verengung, das Rohr nicht erweitert ist und vorzugsweise der Querschnitt gegenüber der Verengung einen Halbkreis bildet.

9. Reaktionsrohr nach Anspruch 7 oder 8, welches mehrere Querschnittsverengungen (31) aufweist, wobei vorzugsweise die Seite der Querschnittsverengung in alternierender Abfolge wechselt, wobei insbesondere die Querschnittsverengungen spiralförmig oder im Rohrquerschnitt gegenüberliegend versetzt sind, und/oder die Querschnittsverengungen vorzugsweise geradförmig, prismaförmig, zylinderförmig oder kugelförmig sind.

10. Mikroreaktor mit mindestens zwei Mikroreaktorteilen, jeweils mit einem Plattenkörper (1), der in einer Plattenseite eine nutförmige Vertiefung (22) aufweist, in der ein Reaktionsrohr (21) aufgenommen ist und das Reaktionsrohr Anschlussenden (16) an Außenseiten des jeweiligen Plattenkörpers (1) aufweist, wobei Reaktionsrohre (21) der verschiedenen Mikroreaktorteile über Anschlussenden (16) über ein Verbindungselement (8) verbunden sind.

11. Mikroreaktor nach Anspruch 10, **dadurch gekennzeichnet, dass** ein Verbindungselement (8, 20) einen Einlass oder Auslass (12) für Reaktionsfluid in das Reaktionsrohr (21), und/oder einen Einlass oder Auslass (36) für Fluid in den Kanal der Vertiefung aufweist.

12. Mikroreaktor nach Anspruch 10 oder 11, **dadurch gekennzeichnet, dass** die Reaktionsrohre (21) der verschiedenen Mikroreaktorteile (1) durch Steckverbindungen (20), Rohre oder Schläuche verbunden sind.

13. Kit zum Herstellen eines Mikroreaktors nach einem der Ansprüche 10 bis 12, umfassend einen Mikroreaktorteil, vorzugsweise mindestens zwei Mikroreaktorteile, nach einem der Ansprüche 1 bis 6, und vorzugsweise ein Verbindungselement zum Verbinden der Reaktionsrohre der Mikroreaktorteile.

14. Verwendung eines Mikroreaktorteils nach einem der Ansprüche 1 bis 6, eines Reaktionsrohrs nach einem der Ansprüche 7 bis 9, oder eines Mikroreaktors nach einem der Ansprüche 10 bis 12 zum Durchmischen zweier Fluide in den Reaktionsrohren, vorzugsweise zusätzlich um eine chemische Reaktion der beiden Fluide zu bedingen.

15. Verwendung nach Anspruch 14, **dadurch gekennzeichnet, dass** ein Mikroreaktor mit mindestens zwei Mikroreaktorteilen verwendet wird und die Reaktionsrohre der Mikroreaktorteile auf unterschiedliche Temperaturen erwärmt oder gekühlt werden, vorzugsweise durch ein Wärmeträgermedium, vorzugsweise Wasser, welches in den nutförmigen Vertiefungen geführt wird.
